# EUROPEAN PATENT APPLICATION

(11) **EP 4 001 247 A1**
(43) Date of publication of application: **25.05.2022**
(21) Application number: 20398013.1
(22) Date of filing: 13.11.2020
(51) Int. Cl.: C05F 9/02, C11B 9/02, B03B 9/06, B09B 3/00

(54) **SYSTEM FOR ORGANIC WASTE TRANSFORMATION, ITS BY-PRODUCTS AND RESPECTIVE METHOD**

(71) Applicant: Pipe Masters Lda, 4495-145 Póvoa do Varzim (PT)
(72) Inventor: Oliveira, Marco Paulo Neves, 4490-410 Póvoa de Varzim (PT); de Castro, Nuno Miguel Alves, 4490-624 Póvoa de Varzim (PT); Calixto, João Paulo Duarte, 2425-890 Leiria (PT)
(74) Representative: Pereira da Cruz, Joao

(57) **Abstract**

This invention relates to a system for the conversion of organic waste and by-products into organic agricultural improvers, manures or fertilisers, and animal feeds, and essential oils. In particular, it relates to a system and technology for the production of organic improvers and/or animal feed meals from organic waste, in a rapid process without composting, namely directed at agricultural application, from plant or animal by-products, of domestic origin, in the primary, industrial and tertiary sectors. Depending on the type of by-product/waste to be treated and the group of enzymes to be used, the same system is also capable of extracting essential oils and aromas. The present invention also discloses the processes intended for obtaining each of the three products obtained with the present system.

## Description

### TECHNICAL FIELD OF THE INVENTION

This invention relates to a system for the conversion of organic waste and by-products into organic agricultural improvers, manures or fertilisers, and animal feed, essential oils and/or aromas. More particularly, it relates to a system and technology for the production of organic improvers and/or animal feed meals from organic waste, in a rapid process without composting, in particular directed at agricultural application, from plant or animal by-products of domestic origin, in the primary, industrial and tertiary sectors. Depending on the type of by-product/waste to be treated and the group of enzymes to be used, the same process allows different types of products to be provided. This invention also relates to an innovative system for recovering essential oils and aromas, in particular, it relates to equipment that allows aromas and essential oils to be extracted from fruits and botanicals, using a vacuum system-assisted enzymatic approach.

### SCOPE OF THE INVENTION

Pollution resulting from organic waste not only is harmful to the environment, but its pollutants are also not tolerable to human beings. Since global resources are being wasted, and taking into account that environmental sustainability is a fundamental issue, it has become a priority to regenerate organic waste and "turn waste into gold", i.e. into usable raw material.

The method which is the object of this invention consists in the conversion of the nutrients present in the by-products through an aerobic reaction, using a complex of selected enzymes in an environment with controlled homogenization, stirring, pH and temperature. At the end of the controlled enzymatic operation, stabilization and drying are carried out in order to achieve the recommended specifications for the organic improver or type of meal desired. Thus, this enzymatic conversion of the organic component present in the plant and animal by-products is carried out taking into account the nature of each by-product and the possible combination thereof. The aim of this optimization is to obtain a process that is much faster and more efficient than alternative processes, making its operation feasible in small-sized transportable units. For this method to be carried out, adequate equipment is required, which is also the object of this invention.

The system for the conversion of waste and its by-products into organic improvers and the method thereof, that is the object of this invention, brings advantages over the traditional composting process, saving time and space, through the development of an innovative treatment system and the application of an exclusive formula to stabilize waste and produce the organic improvers that meet the growth and safety requirements of crops. This technology successfully satisfies all of the above criteria and produces quality by-products within 3 to 8 hours, with low operating costs.

While traditional composting breaks down the organic matter through micro-organisms, since carbon dioxide (CO2) and methane (CH4) are released as a consequence of their metabolism, resulting in massive loss of energy and carbon, the present invention applies enzymes as a catalyst to "react" and since the reaction period is thus very short, there is no loss of carbon and energy.

In the case of the present invention, the release of carbon dioxide in the production of the fertiliser is much lower than in other treatment processes. Thus, for the same composition, the NPK content of the fertiliser, the "carbon footprint" is much lower and the conversion efficiency is much higher, producing a high quality organic improver and reducing the greenhouse effect in the environment.

There are many applications of this invention, namely including supermarkets, the agricultural industry, aviaries and slaughterhouses, logistic centres, municipal markets, hotels and restaurants.

For the production of animal feeds, this technology also provides significant advantages compared to those existing on the market, not only by making available and degrading into amino acids the proteins present in the by-products through enzymatic reaction, in addition to the fact that the efficient drying system is a great asset for the energy efficiency of the process, but also controlling the moisture content of the product, which is a quality factor. Low temperature drying allows greater control in obtaining the moisture parameters of the final product.

The distillation process is a technique for separating mixtures with different boiling points. The principle of this technique consists in exposing a mixture of 2 liquids to a temperature higher than the boiling temperature of one of them. The steam generated enters a condenser inside which a cooled fluid circulates, thus promoting its condensation into a collecting flask.

This principle has been applied for centuries to the extraction of essential oils from botanicals or citrus fruits. The distillation of this type of matrix drags essential oils with it, allowing them to be collected and separated by differentiation of phases, since they are water insoluble compounds.

Therefore, according to the International Standards Organization (ISO), an essential oil is defined as a *"complex mixture of tens or hundreds of chemical substances of varying composition, obtained from a plant matrix by distillation with water or steam or from the epicarp of citrus fruits through mechanical processing or by dry distillation".*

The distillation process also results in an aqueous fraction that is rich in aromatic compounds similar to those present in the essential oil fraction but which, because they are polar compounds, are dissolved in water. This fraction is called aroma or hydrolat.

The method which is the object of this invention consists in using a specific enzymatic system for the matrix from which essential oils and aromas are to be extracted and isolated, under controlled pH and temperature conditions, using an efficient, low temperature, vacuum distillation system in one same unit. The aim of this optimisation is to obtain a fast and effective process, with the recovery of essential oils and aromas of better quality than alternative processes, making their operation possible in small transportable units. For this method to be carried out, adequate equipment is required, which is also the object of this invention.

The system for under-vacuum enzymatic extraction of essential oils and aromas from fruits and botanicals, which is the method object of the present invention, stands out for bringing to the industrial environment a significant benefit in that it gives the industrial units dealing with this type of matrix an extra possibility of economic valorisation of their waste material. In addition, the oils and aromas obtained have a superior quality profile, since they are extracted under vacuum at lower temperatures than with the usual distillation equipment. This results in a lower thermal degradation of the aromatic components. For the same reason, the equipment underlying this invention also has the advantage of being energetically more favourable. This technology successfully meets all of the above criteria and produces quality oils and aromas within 3 to 5 hours at low operating costs.

The applications of this invention range from the cosmetics industry to the pharmaceutical industry, food industry, aromatherapy, agricultural industry or perfumeries.

The maintenance of vital functions in any living organism is intrinsically linked to its ability to catalyse chemical reactions in a specific and effective way. The occurrence of such reactions in all organisms is the responsibility of enzymes. Enzymes are biocatalytic systems that accelerate the occurrence of biochemical reactions. This means that they reduce the activation energy of metabolic reactions, allowing them to occur under very specific conditions of temperature and pH and pressure (Agarwal, 2006).

Enzymes are proteins (with the exception of ribozymes - autocatalytic RNA molecules (Walter & Engelke, 2002)) present in the intra- and extracellular environment of living organisms. Although in their constitution they have from tens to more than two thousand amino acid residues, the fraction involved in the catalytic reaction - active site - consists of less than 10 amino acids (Furnham et al., 2013). The active site of enzymes, together with its tertiary and quaternary structure, are responsible for the high affinity and specificity to the substrate. Its charge, the hydrophilic/hydrophobic characteristics, as well as the presence of structural grooves complementary to the substrate allow the formation of a strong bond of the enzyme active site to the substrate. Emile Fischer proposed in 1984 that the enzyme/substrate interaction follows a "key-lock" model which presupposes a perfect fit of a "key" (substrate) into a "lock" (enzyme) - the enzyme-substrate complex (Lemieux & Spohr, 1994). The act of turning the key is the equivalent of the catalytic action of the active site of the enzyme on its substrate with the formation of the reaction products:
E + S → Enzyme-substrate complex → E + P

This interaction reduces the energy which is required for the occurrence of a certain reaction whose spontaneity is, under normal conditions, reduced. This means that the activation energy is reduced, allowing the formation of a product and release of the enzyme (Robinson, 2015).

It is clear from the above that the conditions of the environment have an influence on the speed/occurrence of an enzymatic reaction (Nelson & M., 2005). At low temperatures, the kinetic energy of the system is also low, which decreases the frequency of collisions between the enzyme and the substrate and, therefore, the speed of reaction. On the other hand, too high temperatures break the bonds that maintain the tertiary and quaternary structure of enzymes, leading to their denaturation, i.e., enzymes undergo a change in shape that makes it impossible to fit into the substrate. Once denatured, the enzymatic structure does not return to its initial form. The pH is also a fundamental factor in maintaining enzyme activity. The side chains of amino acids of the active site of some enzymes, for example, can act as weak acids or bases with critical functions to the correct performance of the enzyme and the maintenance of which depends on the existence of a certain status of ionization of the medium. Furthermore, the maintenance of the proteins structure depends on the degree of ionization of their side chains (Grahame et al., 2015).

The use of enzymes currently extends to almost all industries and it is an essential ally: reducing the time needed for processes to take place; reducing the need for energy; having a cost considerably lower than the economic benefits it brings; in addition to being non-toxic and non-harmful to the environment (Li et al., 2012; R. Singh et al., 2016).

In the pharmaceutical industry, for example, proteolytic enzymes are used to remove dead tissue from burns (R. Singh et al., 2016); nattokinase, a fibrinolytic enzyme, is used to reduce some clotting factors and lipids that are associated with a high risk of cardiovascular disease (Mane & Tale, 2015). The glucose oxidase enzyme is used in toothpastes along with amyloglucosidase for plaque removal (J. & H., 1979). In addition, they prove to be quite promising as enzybiotics - hydrolases with the ability to degrade the cell wall of gram-positive bacteria and which can thus be used as alternatives to conventional antibiotics (Lopez et al., 2017; Shrivastava et al., 2019).

In the cosmetics industry, superoxide dismutase is one of the most relevant enzymes. It is an oxidoreductase which neutralises the reactive oxygen species responsible for skin ageing and whose use for cosmetics in Europe was patented in 1973 by L'Oréal (Sunar et al., 2016). Glutathione sulfhydryl oxidases are also used in hairdressers because they alter the structure of the hair, making it easier to perform perms (Faccio et al., 2011).

In the paper industry, cellulases, hemicellulases and laccases of various origins have been used in the degradation of lignocellulosic material for paper pulp production, in the bleaching of paper pulp as substitutes to chlorinated reagents that are toxic and dangerous, as well as in the removal of ink from used sheets, during the recycling process (Bajpai, 1999; Chauhan, 2020; G. Singh et al., 2016).

In the detergents industry, amylases, proteases, lipases and pectinases are used, among others, as part of detergents to facilitate the removal of food and fat stains (Herrera-Marquez et al., 2019; Novozymes, 2012).

The food industry is also a major beneficiary of large-scale enzyme implementation. In beverages, for example, the enzyme lactase is used for the production of lactose-free milk and its derivatives (Mlichová & Rosenberg, 2006) and, in juices, pectinases are used to degrade pectin in fruit juices, giving them a clearer appearance, in addition to positively influencing their colour and taste (Pedrolli et al., 2009; Rebello et al., 2017). In bakery and pastry, α-amylases are used to increase the conversion of starch into yeast-fermentable sugars, which translates into improvements in the taste of the bread, as well as in the colour and crispness of the crust (Van Der Maarel et al., 2002).

### BACKGROUND OF THE INVENTION

The European patent document EP1557403 is identified as the state of the art for the invention, in which a system for composting-free disposal of organic waste and the method thereof are disclosed. There are several differences between the state of the art and the present invention, of which are herein highlighted the following:
- in the said method, the C/N (carbon/nitrogen) ratio is adjusted, which is not the case in the present invention, since in the latter no other elements are added (biomass), this addition being optional, i.e., the adjustment of the C/N ratio is obtained through supplementation with other organic materials external to the source of organic waste, while in the present invention there is no need to add external materials, and this addition is optional;
- another difference is the fact that neither of Kerosene and steam are used in the present invention; what is performed in the present invention is the so-called efficient drying, i.e., a vacuum drying which is carried out at low temperature, thus providing a very high energy efficiency of the equipment. Thus, the reaction temperature, in the said invention, is below 100°C, and the maximum reaction temperature, in the present invention, is 70°C;
- the grinding method is different: the aforementioned document discloses the grinding of sludge into fine sludge, while in the present invention there is a stage of pre-crushing and extrusion of buds and then a subsequent cutting;
- there is also a difference in the enzymes used, since the enzymatic complex of the document EP1557403 is wrapped in activated charcoal, while in the present invention simple enzymes are used, which promote the hydrolysis of fats, thus eliminating the step of separation of water from fat, as well as all the components necessary for this, thereby promoting a less expensive, simpler equipment and of a more efficient use. What is used in this invention is a complex of pure enzymes, whose composition depends on the material to be treated. Thus, the enzyme complex (set of enzymes) is formulated depending on the matter to be treated but also on the nutrients/characteristics that one intends to highlight, taking into account the purpose of the final product.

In this way the present invention brings to the state of the art a much improved process, not only in the energy recovery as regards the equipment used for the implementation of the method, since the vacuum drying is a great advantage, but also in the method itself, with the stage of application of the enzymes in an environment which leads to their greater efficiency, such as controlled temperature, pH and pressure. This invention also aims at controlling and adjusting other values which are required for a balanced organic improver, such as Electrical Conductivity, Ammoniacal Nitrogen (product stability), pH and NKP (Nitrogen, Potassium and Phosphorus).

In what concerns the extraction of essential oils, the following documents are worth emphasizing.

The Portuguese patent document No. 86840 discloses a continuous distiller for obtaining essential oils from eucalyptus biomass and other plants, and protects a continuous distillation system that is distinct from the vacuum distillation system which is the object of this invention.

The European patent No. 989181 discloses a process for the production of essential oils by treatment with supercritical water. This extraction system uses supercritical water as an aid to the extraction and is therefore a different system from the one of the present invention, which uses a specific enzyme complex for the same purpose.

The patent document CN210122562 uses a vacuum system to obtain essential oils and aromas, however, it does not include an enzymatic digestion step which is fundamental for increasing the yield and efficiency of the process, as is the case with the present patent.

The extraction methodology proposed in patent CN109536286 is based on the use of enzyme complexes for refining and increasing the extraction of aromatics, however, it presupposes a subsequent distillation at atmospheric pressure and not an optimized vacuum distillation process as stated for the equipment associated with this invention.

Therefore, the present invention brings to the state of the art a much improved process, not only as regards the energy recovery of the equipment used for the implementation of the method, since the distillation under vacuum is a great asset, but also in the method itself, with the stage of application of the enzymes in a controlled environment, which allows the degradation of extraction matrices with the release of aromatics.

### SUMMARY OF THE INVENTION

In one embodiment, this invention relates to a system for the processing of organic waste and its by-products into organic agricultural improvers and the method thereof. The system aims to carry out the conversion and stabilisation operations under the optimum conditions of the enzymatic complex, providing the maximum efficiency of the conversion of nutrients during the aerobic reaction, as well as the operations of enzymatic digestion of organic waste to obtain an organic fertiliser. It comprises a module intended for the reception, selection and preparation of waste, and a reaction module; the process itself, and drying, as well as a system for the transport, unloading and packaging of the product. Since the process occurs under optimum operating conditions, seeking the highest efficiency with the minimum consumption of resources, the enzymatic conversion of the organic compounds will be maximised, resulting in a stable and nutrient-rich product.

In one embodiment, this system enables it to be operated at the same place where the by-products are generated, having a high level of automation and being susceptible of operation with remote supervision, avoiding the transport of the by-products with a high level of humidity to the processing and treatment site, reducing both their transportation costs and their risk of deterioration.

In one embodiment, the method which is the object of this invention comprises several fundamental stages for the quality of the final product: grinding; preparation; reaction; drying; unloading; granulation; and it can also include packaging; and cleaning.

It should be noted that the Carbon / Nitrogen (C/N) ratio is a very important factor for traditional composting. It is used as a reference for the degree of maturity of the final product, but it is not a general rule and is not an essential factor for constituting the fertilizer, because the carbon content is not the element that affects the crop growth. The present invention is capable of storing the carbon in the final products, so the C/N ratio remains the same as in the original waste after treatment.

In addition to this advantage, it should be noted that the time is much shorter when compared to the methods known in the state of the art, the space of the equipment is smaller, thus increasing portability, the productivity (there is an estimated consumption for the equipment: 100kw/ton of material to treat) is higher and the operating cost is lower, which reduces the necessary investment. It is also an odourless process, because in addition to being a closed process, an ozonation system is induced, with no Carbon Dioxide and Methane emissions to the environment, and the water produced during the operation is reused.

In one embodiment, in the process of producing meal for animal feed, it can be obtained from by-products of animal or plant origin, such as inedible waste from animal slaughter or the collection of waste from butcheries or fish markets. They must be free from materials which are foreign to their composition, as well as from pathogenic micro-organisms.

In one embodiment, the process begins with grinding the waste into small particles. After this process, enzymatic hydrolysis is the next step. This process consists in breaking the bonds between the amino acids that compose the protein in order to make it more digestible. One of the essential factors to guarantee the quality of the meal is the moisture content below 10%, so as to avoid microbial activity.

In one embodiment, the careful and selective choice of the enzyme complex for the matrix to be treated, as well as controlling the pH, temperature, pressure and stirring conditions, allow meals for animal feed to be obtained with greater bioavailability of nutrients. The technology of this invention thus substantially increases the ease of access to the total protein content and its digestibility, as well as the micronutrient concentration.

In one embodiment, concerning the same process, the introduction of an advanced condensation system in the drying process allows the collection and valorisation of aromas and essential oils. The energetic efficiency of a low temperature drying allows the oils and aromas collected to present a clean and more intense organoleptic profile.

In one embodiment, this invention relates to equipment intended for the extraction of aromas and essential oils, which operates at low temperatures. This ability to work at low temperatures is conferred by the presence of an extraction system under vacuum, aided by prior enzymatic digestion with specificity for the components of the extraction matrix where the essential oils and aromas are found. The extraction equipment has a compartment which is referred to as Soxhlet tank. This tank is attached to an essential oil separator, which enables the collection of the extraction solvent and its recirculation, contributing to a higher yield of the process. The system comprises a receiving module, a grinding module, which may or may not be inside the reaction module, a reaction module with controlled pH, temperature and pressure, a vacuum system, a tank for the collection of aromas and essential oils, an essential oil separation tank and a Soxhlet tank.

### BRIEF DESCRIPTION OF FIGURES

The Figures of this invention comprise the following reference numbers, which correspond to the following technical characteristics:
(1) Raw-material receiving hopper;
(2) 3-phase grinder
(3) Cooling chiller
(4) Pneumatic butterfly valve
(5) Body of reactor
(6) Pneumatic discharge port;
(7) Horizontal mixer;
(8) Stirring motor reducers;
(9) Mechanical seal for retention of product;
(10) Heating chiller;
(11) Bag filter;
(12) Discharge hopper;
(13) Central steam inlet;
(14) Insulated tank;
(15) Compressor;
(16) Condenser;
(17) Electrical switchboard and control panel of the system;
(18) Load carrier;
(19) Moisture sensor;
(20) Temperature probe;
(21) Collection tank;
(22) Instrumentation;
(23) Skid structure;
(24) Water circulation pump;
(25) Ozonation diffuser;
(26) Eccentric screw pump;
(27) Vacuum pump;
(28) Globe pneumatic pump;
(29) Centrifugal Pump;
(30) Vacuum Filter;
(31) Centrifugal Pump
(32) Essential Oils Tank
(33) Soxhlet Tank

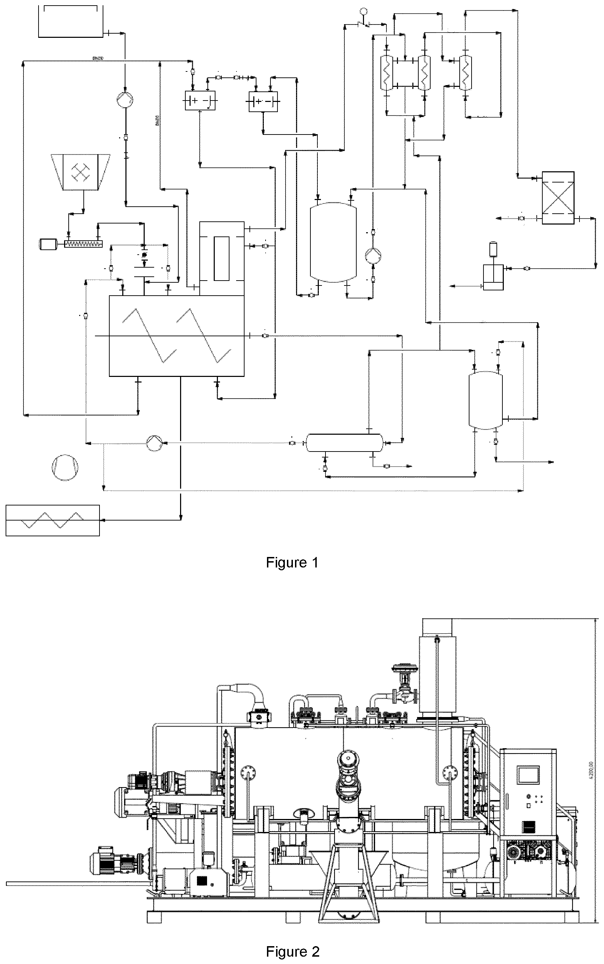

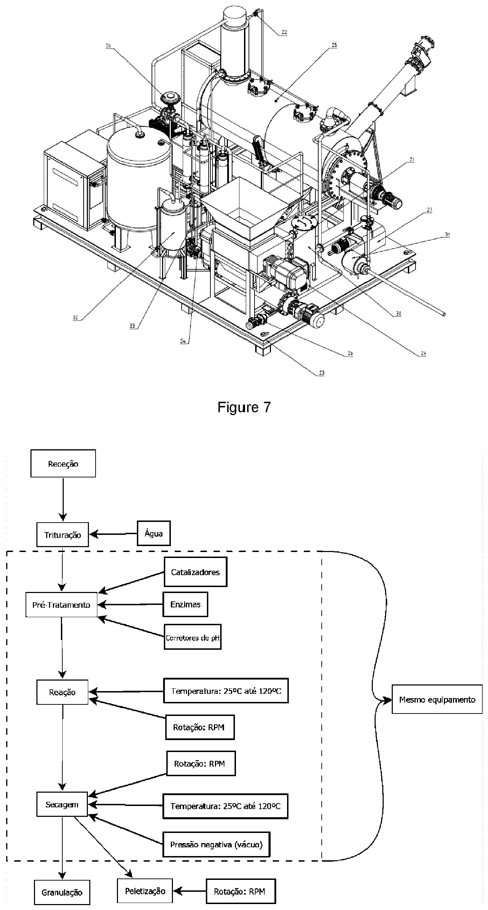

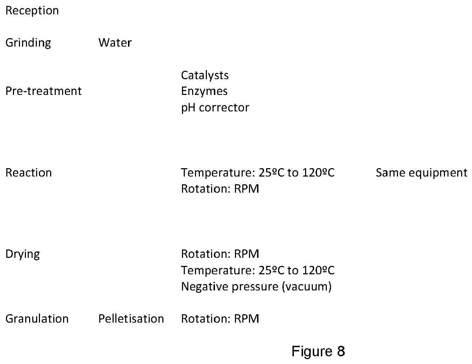

Figure 1 - Scheme of operation concerning one embodiment of the system of this invention.
Figure 2 - Raised front view of an embodiment of the system of this invention.

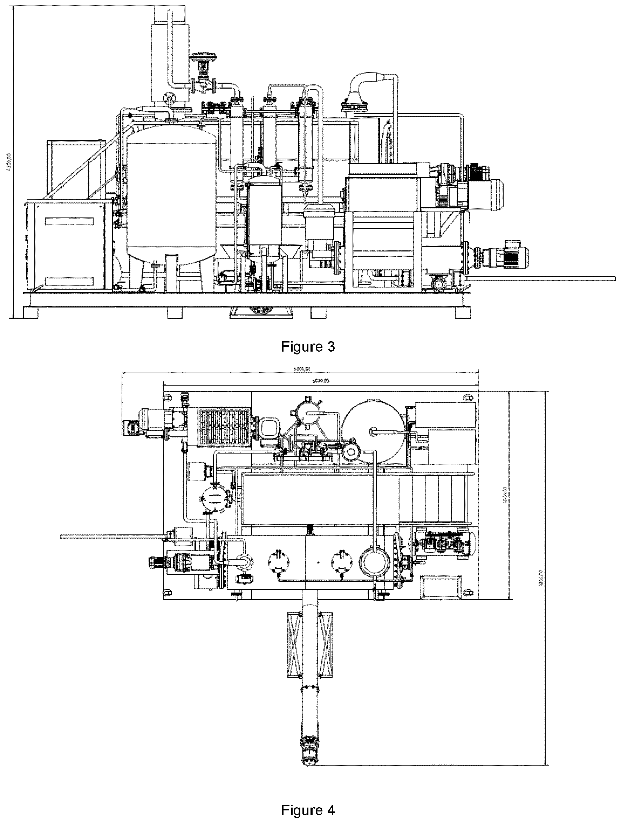

Figure 3 - Raised rear view of an embodiment of the system of this invention.
Figure 4 - System Layout
Figure 5 - First view of an embodiment of the system of this invention. Caption:
   1- Tolva de Receção
   2-Triturador 3 Fases
   3-Chiller de Arrefecimento
   4-Válvula Borboleta Pneumática
   5-Corpo Reator
   6-Porta Pneumática de Descarga
   7-Misturador Horizontal
   8-Motoredutor de Agitação
   9-Empanques Mecânicos
   10-Chiller de Aquecinento
   1- Raw-material receiving hopper;
      2- 3-phase grinder
      3- Cooling chiller
   4- Pneumatic butterfly valve
      5- Body of reactor
   6- Pneumatic discharge port;
      7- Horizontal mixer;
   8- Stirring motor reducer;
      9- Mechanical seals;
      10- Heating chiller;

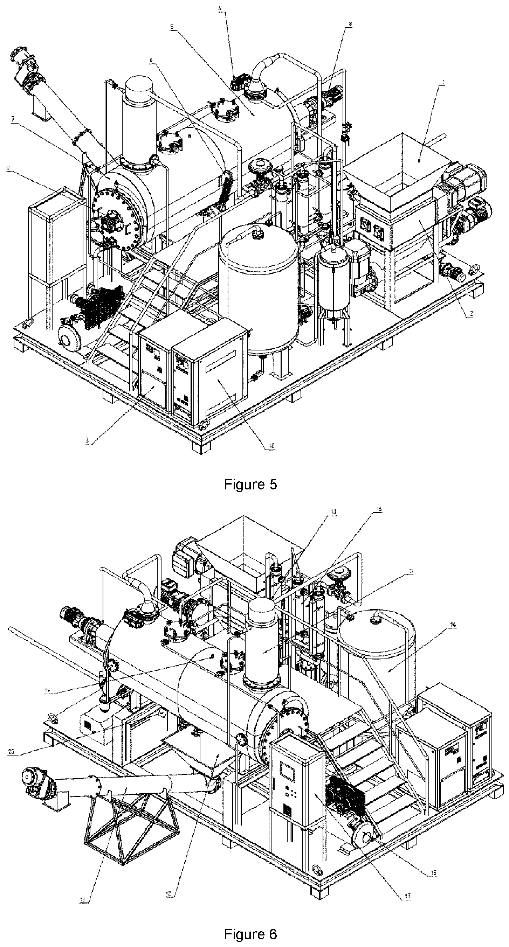

Figure 6 - Second view of an embodiment of the system of this invention. Caption:
   11-Filtro de Mangas
   12-Tolva de Descarga
   13-Central de Entrada de Vapor
   14-Tanque Isolado
   15-Compressor
   16-Condensador
   17-Quadro Elétrico
   18-Transportador de Descarga
   19-Sonda de Humidade
   20-Sonda de Temperatura
      11- Bag filter
         12- Discharge hopper
         13- Central steam inlet
      14- Insulated tank
      15- Compressor
      16- Condenser
         17- Electrical switchboard
         18- Discharge conveyor
      19- Moisture sensor
         20- Temperature probe
Figure 7 - Third view of an embodiment of the system of this invention. Caption:
   21- Depósito de Água de Coleta
   22- Instruεnentação
   23- Skid
   24- Bomba Circuladora de Água Fria
   25- Difusor de Ozonização
   26- Bomba Parafuso Excêntrico
   27- Bomba de Vácuo
   28- Bomba Globo Pneumática
   29- Bomba Centrifuga
   30- Filtro de Vácuo
   31- Bomba Centrifuga
   32- Depósito de Óleos Essenciais
   33- Depósito Soxhlet
      21- Collecting water tank
      22- Instrumentation
      23- Skid
   24- Cold water circulation pump
      25- Ozonation diffuser
         26- Eccentric screw pump
      27- Vacuum pump
         28- Globe pneumatic pump
      29- Centrifugal Pump
         30- Vacuum Filter
      31- Centrifugal Pump
         32- Essential Oils Tank
         33- Soxhlet Tank
Figure 8 - Schematic representation of an embodiment of the process of this invention.

### DETAILED DESCRIPTION OF THE INVENTION

In one embodiment, the present invention relates to a system for the conversion of waste and its by-products into agricultural organic improvers and the method thereof.

In an additional embodiment, the process starts with the reception of the organic waste in a hopper (1) that directs the raw material to the grinding phase. After the material enters the hopper (1), it will be moistened, if necessary, and then grated by the 3-phase grinder (2) until it reaches a uniform and adequate granulometry matrix (5-15mm), in order to guarantee the efficiency of the enzymatic reaction process. The grinding module is composed of three distinct elements in order to cover different types of by-products, to adapt not only to hard but also soft and elastic materials such as fat: 1) pre-crusher; 2) bud extruder and 3) subsequent cutting. The process is carried out sequentially between the various equipments obtaining an organic material with a moisture content of 70%-90%. Once the crushing process is finished, the organic material is sent to the reaction module in order to carry out a pre-treatment phase, by means of an eccentric screw pump (26), where there is preferably a flow rate of 3-5 ton/hour. In this phase, the preparation for the reaction process comes into effect, in which the material is placed at optimal temperature (50-70°C), pressure (0-10 bar), stirring (10-30 RPM) and pH (5-9). The reaction module consists of the following elements: reactor body (5), horizontal mixer (7), stirring motor (8), vacuum pumps (27) with protective demister; bag filter (11); cooling chiller (3).

Once the optimal conditions are achieved, specific enzymes are added for each type of organic waste and the reaction phase begins. During this phase the product is mixed evenly, with rotation between 10-30 RPM, through a mixer (7), preferably a horizontal, helical worm mixer. This process has duration of approximately 2-4 hours.

The use of specific enzymes, such as pectinases, amylases, cellulases, proteases, hemicellulases, for the conversion of differentiated organic compounds is essential for an efficient and complete digestion of the materials.

The various valences of enzymes as catalytic agents, by promoting transformations in food raw-materials, can be quite useful in the conversion of this type of organic matter into a stable and nutritious form for plantations. The use of enzymatic complexes suitable for different organic matrices under controlled conditions of pressure and temperature can provide a conversion, within a period of hours, similar to that obtained during the composting process, without the need for long periods and with a negligible release of carbon dioxide.

In fruits with a low degree of ripeness, pectin is found in an insoluble form linked to cellulose - protopectin - giving rigidity to the cell wall. As the fruit ripens, the enzymes degrade the skeleton and/or side chains of pectin, making the molecule more soluble and the peel of the fruit softer.

In one embodiment of the present invention, in order to degrade and debranch the starch molecule into its constituent monomers, 3 types of amylases are used:
- endoamylases: they cleave the α-(1,4) glycosidic bonds randomly inside the amylose and amylopectin molecule, giving origin to oligosaccharides of various dimensions and dextrins. α-amylase is an example of an endoamylase;
- exoamylases: act on the external residues of the amylose and amylopectin molecules by cleaving α-(1,4) glycosidic bonds, in the case of β-amylase, or by cleaving α-(1,4) and α-(1,6) glycosidic bonds - amyloglucosidase and glucoamylase. Because they act on the ends of starch, exoamylases only release molecules of glucose or dextrins.
- debranching enzymes: isoamylases and pulanases of type 1, which hydrolyse α-(1,6) glycosidic bonds and therefore only act on the amylopectin molecule (Van Der Maarel et al., 2002).
- cellulases: cellulose is a linear polymer of glucose molecules bound through β-(1,4) glycosidic bonds. It represents about one third of the mass of plants having a structural function conferred on it by the linear structure of their chains, which are linked symmetrically by insoluble hydrogen bonds. This dense and strong bond makes the cellulose fibres an excellent means for supporting the plant.

The ability to act on the cellulose molecule is obtained through 3 types of cellulases:
- Endoglucanases: they break the β-(1,4) glycosidic bonds inside the dense cellulose structure, exposing the cellulose reducing and non-reducing terminals;
- Exoglucanases: or cellobiohydrolases, act on the reducing and non-reducing terminals of cellulose polymers released by endoglucanases releasing cellobiose molecules (glucose disaccharide);
- β-Glucosidases: release β-D-glucose molecules from the non-reducing terminals of the remaining cellulose residues (Jayasekara & Ratnayake, 2019; Raveendran et al., 2018).
- Hemicellulases: hemicellulose is, after cellulose, the most abundant polysaccharide present in the cell wall of plants, representing about 20% of its weight. It is a heteropolymer whose chain size does not exceed 3,000 residues and may or may not be linked to cellulose. Its structure is extremely heterogeneous, consisting of different proportions of monosaccharides such as D-xylose, D-mannose, L-arabinose, D-galactose, D-glucose, etc. linked to each other at various locations in the chain by glycosidic bonds.
- Proteases: proteins are large molecules present in all living organisms. They consist of one or more chains of amino acids which are bound through peptidic bonds between the carboxyl group of one amino acid and the amine group of the next. The sequence of amino acids in a protein determines its primary structure. The amino acids in a protein are rearranged in a stable way through hydrogen bonds between the H atoms of the amine groups and the O atoms of the carboxylic groups of the polypeptide - secondary structure. The originated secondary structure tends to become tangled in a three-dimensional structure whose shape depends on the characteristics (charge, polarity) of its amino acids - tertiary structure.

Proteins are classified as exo- and endo- peptides depending on whether they promote the hydrolysis of the peptide bond which binds the amino acids of the protein at its end or inside. In turn, endopeptidases are classified according to the residues of their active site:
- Serine proteases;
- Cysteine proteases;
- Threonine proteases;
- Proteases of aspartic acid;
- Proteases of glutamic acid;
- Metalloproteinases.

Each endopeptidase, is composed of different proteases, which have the ability to cleave peptidic bonds in a specific way, between different amino acid residues. In this way, knowing the specificity of the proteases as well as the characteristics of the proteins to be degraded, it is possible to promote selective hydrolysis of the matrix proteins. This fact is of special relevance to guarantee a stable conditioning of the final product, thus avoiding further organic decomposition processes.

In one embodiment, the use of various enzymatic complexes aims to convert the nutrients present in the organic by-products into forms that can be assimilated by the plants through the production of an organic improver. Thus, this enzymatic approach to the production of an organic improver represents a faster, more economical and efficient alternative to composting, and is extraordinarily more ecological - it has optimised systems for reducing energy costs, and the release of carbon dioxide is very low.

Even so, the use of enzyme complexes alone is not sufficient for the enzymatic production of an organic improver. Ensuring the right conditions for the enzymatic conversion process, namely temperature and pressure, is as important as an appropriate choice of the enzyme complex that will act on the matrix. In one embodiment, the organic improver is produced through a hydrolysis reaction and therefore requires the presence of water to occur. This presupposes the need to dry the final product to an adequate moisture content and stabilize it, ensuring that no microbial growth occurs in the finished product.

The various steps involved in an embodiment of the process for enzymatic conversion in a reactor are described below:
- Loading the by-products and separating non-organic waste: the by-products obviously have to be conveyed to the reactor. The presence of non-organic by-products such as plastics, metals or glass may occur. These must be removed from the reaction matrix. The presence of metallic ions, resulting from the dissolution of metallic residues, can inactivate and/or reduce the activity of some enzymes. In addition, together with plastics, they can act as a physical barrier, preventing contact of the matrix to be treated with the enzyme complex, thus inhibiting the conversion. It is therefore essential that there is a separation system, either manual or automated, which ensures that the by-product to be treated has no physical contaminants.
- Shredder/Crusher: industrial food waste is then crushed. This physical action is particularly relevant as it increases the contact surface of the matrix with the enzyme complex. Furthermore, it is at this stage of the process that water is added, which is fundamental to the occurrence of the hydrolysis reaction. The action of the crusher together with the addition of water allows the dissolution and dispersion of the particles of the residue in the reaction medium, which makes the action of enzymes in the various constituents of the matrix more effective. This step is calibrated, as far as the granulometry of the crusher is concerned, in order to guarantee the reactional homogeneity between different batches.
- Enzymatic reaction with controlled temperature and pH: once the physical degradation is guaranteed, the next step consists in the addition of an enzyme complex which is formulated to have high specificity for the by-product to be treated. The temperature and pH of the reaction medium greatly influence the behaviour of the enzymes. Therefore, prior to the addition of the enzyme complex, a temperature and pH adjustment has to be made in order to make these parameters optimal for the functioning of the enzymes. The enzyme complex is added, promoting the conversion of nutrients from the matrix during an established period. During the reaction, the temperature and pH are monitored and the correct homogenization of the matrix is ensured.
- Drying: The maximum moisture content, expressed as a percentage by mass, allowed in the fertilizing material is 40%. So, at the end of the reaction, the organic improver produced has to be dried to a percentage of moisture lower than that legislated. This stage is carried out using a vacuum drying system in which pressure reduction allows the evaporation of the liquid fraction in the form of steam at a temperature quite below 100°C. The use of this technology makes the drying step much quicker and energy efficient.
- Granulation and packaging: once produced, dried and stabilised, the organic improver is packaged in transport/sale units according to the customer requirements. Before being packed, the improver undergoes a final physical transformation: it is granulated in the form of pellets or spheres, which facilitates its handling and distribution throughout the crop fields.
- Sanitisation: the production process of the organic improver is carried out in batches. It is therefore desirable that, after each reactional cycle, the reactor is cleaned, avoiding the degradation of its constituents and preventing the spread of colonies of microorganisms that may contaminate and impair the microbiological stabilization of the improver produced in the next batch. This process is achieved using an integrated sanitisation system - Cleaning in Place (CIP) - which uses caustic detergents to remove organic matter remnants and a detergent with nitric acid to remove incrustations from the reactor.

The enzymatic digestion is fundamental to the production of essential oils, since it allows the aromatic compounds present in the matrix to be released. This is of particular relevance as the said release facilitates their dragging and subsequent condensation in the essential oil tank, as well as providing better yields.

Another crucial issue is the minimal impact on the environment resulting from the process of this invention. Unlike other organic decomposition processes, such as composting where the degree of carbon dioxide and methane emissions into the atmosphere is high, this technology has zero or residual emissions, this being an important reference factor in the process. This is because the closed circuit limits the emission of gases and also the duration of the reaction, which lasts only 2-3 hours, to the detriment of the known composting which makes the reaction for months in piles usually in the open air. This allows for greater digestion efficiency in addition to giving the process an environmental sustainability factor which can be considered "environmentally friendly".

In one embodiment, after the reaction period, the drying phase begins. By increasing the temperature and reducing the pressure, the distillation system comes into operation, dragging the aromatic compounds together with the water which allows their subsequent separation by phase differentiation in the essential oil collection tank. At this stage, the product will be stored at a higher temperature than the reaction process with continuous stirring (10-30 RPM). The temperature increase will be controlled to avoid volatilisation or carbonisation of the organic compounds, the ideal range being between 60°C and 75°C. The equipment also monitors the moisture content in order to obtain a final product with the desired characteristics, which depends on the purpose of the final product; for instance, if there is granulation, the moisture content should be approximately 30%. If it is intended for direct application, then it should be from 10 to 30%. Vacuum aspiration begins at this stage and is referred to as low-temperature drying. This is where an unexpected technical effect is noticed, since the energy consumption does not exceed 100kw/ton, with an effect of atmospheric depression being identified, due to the mechanical action of the vacuum pump that translates into a significant change in the traditional state of water evaporation at atmospheric pressure (100°C). With the normal drying methods, approximately 1000 Kilocalories per litre of water would be evaporated. Another advantage is the possibility of reusing the collected water resulting from the drying process.

In one embodiment, the temperature reached in the drying phase generates steam that is vacuum-sucked into a condenser (16) after passing through a bag filter (11) which retains all the existing particles. In the condenser (16), condensation is facilitated by the circulation inside the condenser of a fluid cooled by a cooling chiller (3), and the water is then withdrawn to a collection tank (21).

Depending on the application and characteristics of the crops, the organic improver can take different forms. However, granulation represents a great advantage and adds commercial value to the product because this format allows it to remain in the soil for larger periods of time during the rainy season. In this phase of the process, the product goes to a granulator with a humidity rate of approximately 30% and through a system of rotating parts with different directions and speeds, they form the 2-6cm granules that make up its final appearance. This system of rotating parts consists of rollers and rotors that turn around an axis, as well as cutting chambers for sizing the granules.

Additionally, in another embodiment, there are the packaging and cleaning steps. The packaging can be of various forms: in large or small formats. The cleaning procedure is carried out while the equipment is working, and by adding water with sanitizing products (e.g., caustic soda) the cleaning of the equipment is performed.

In a preferred embodiment, the invention relates to a closed system for the processing of organic waste and its by-products into fertilisers, animal feeds and/or essential oils and/or aromas, comprising at least a first module for waste reception, at least a second module for waste reaction and at least a third module for transporting the fertilisers, feed and/or essential oils and/or aromas, which comprise the following elements: a hopper (1), a grinding element (2), a cooling chiller (3), a reactor (5), a mixer (7), a stirring element, a retaining element (9), a heating element (10), a reservoir, a compressor (15), a condenser (16), a system control panel, a moisture sensor (19), a temperature probe (20), a water tank (21), a water circulating pump (24) and a vacuum pump (27).

In an additional embodiment, this invention relates to a system characterized in that the first module comprises the following elements: a hopper (1), a grinding element (2), a cooling chiller (3), a pneumatic butterfly valve (4), a reactor (5), a pneumatic port (6), a mixer (7), a stirring reducer (8), a retaining element (9), a heating chiller (10), a compressor (15), a moisture sensor (19), a temperature probe (20) and a skid structure (23).

In an additional embodiment, this invention relates to a system characterized in that the second module comprises the following elements: a reactor (5), a pneumatic door (6), a mixer (7), a stirring reducer (8), a retaining element (9), a heating chiller (10), a filter, a discharge hopper (12), a central steam inlet (13), a tank (14), a compressor (15), a condenser (16), an electrical panel and control panel (17), a moisture sensor (19), a temperature probe (20), a water tank (21), instrumentation (22), skid structure (23), a water pump (24) and a vacuum pump (27).

In an additional embodiment, this invention relates to a system characterized in that the third module comprises the following elements: a cooling chiller (3), a pneumatic port (6), a discharge hopper (12), an electrical panel and control panel (17), a load carrier (18), instrumentation (22), skid structure (23) and at least one centrifugal pump (29) and/or (30).

In a further embodiment, the present invention is characterized in that it comprises:
at least one hopper (1) for receiving the raw material to feed the reactors;
at least one grinder (2) at the entrance coupled to the hopper (1);
at least one screw pump (26);
at least one pneumatic butterfly valve (4)
at least one reactor (5);
at least two pneumatic discharge ports (6);
at least one horizontal mixer (7);
at least two stirring motor reducers (8);
a plurality of mechanical seals for retention of product (9);
at least two vacuum pumps (27) with protective demister;
at least one bag filter (11);
at least one cooling chiller (3);
at least one central steam inlet (13) comprising an inlet and delivery manifold to a vacuum jacket and chimney, with a modulating valve for temperature control in the reactor jacket, with a pressure reducer;
at least one insulated tank (14);
at least one cold water circulating pump (24);
at least one tubular exchanger (16) for condensation of the steam sucked in from the vacuum dryer, comprising at least two vacuum inlets and preferably a cooling coil with heat transfer area;
an electrical panel and system control panel (17);
at least one discharge conveyor (18)
at least one temperature probe (20) for temperature control in the upper chamber of the dryer;
at least one moisture sensor (19) for humidity control upstream or downstream of the dryers;
at least one collection tank (21) for collecting water from evaporation;
at least one essential oils extraction tank (32) and a Soxhlet tank (33)
instrumentation (22);
and at least one skid structure (23);
at least one compressor (15);
and at least one bag filling station comprising weighing and weight monitoring equipment at the discharge station from the dryer; at least one outlet station for product storage, preferably on a roller conveyor;
and at least one ozonation diffuser (25) for deodorisation.

In a further embodiment, this invention relates to a system characterized in that it comprises a condenser for obtaining essential oils.

In a further embodiment, this invention relates to a process for conversion of waste and by-products into fertilizers, feeds and/or essential oils and/or aromas, characterized in that it comprises the following steps:
reception of organic waste in a hopper (1);
grinding of the waste in a grinder (2);
enzymatic reaction under controlled temperature, pressure and pH conditions;
drying or hydro-distillation, preferably under vacuum;
discharge of fertilisers, feeds and/or essential oils and/or aromas;
optionally, fertilizers and feeds' acquisition of form, preferably by granulation or pelletisation.

In a further embodiment, the present invention relates to a process characterized in that the stage of grinding the waste comprises the steps of pre-crushing, extrusion of buds and subsequent cutting.

In a further embodiment, this invention relates to a process characterized in that the preparation step is carried out with catalysts, an enzymatic mixture and/or a buffer solution.

In a further embodiment, this invention relates to a process characterized in that the enzymatic mixture comprises enzymes selected from the following list: pectinases, endo- and/or exo- polymethylgalacturonases, polygalacturonases, pectate and/or pectin lyases, amylases, endoamylases, exoamylases, debranching enzymes, isoamylases, pulanases of type 1, cellulases, endoglucanases, exoglucanases, cellobiohydrolases, β-glucosidases, hemicellulases, endo and exo-xylanases, proteases, serine proteases, cysteine proteases, threonine proteases, aspartic acid proteases, glutamic acid proteases, metalloproteins and mixtures thereof.

In a further embodiment, this invention relates to a process characterized in that the enzymatic reaction step is performed with rotation and at a temperature from 25°C to 120°C, preferably at a temperature suitable for the optimal combined temperature of the enzymatic mixture in use.

In a further embodiment, this invention relates to a process characterized in that the drying step is carried out with rotation and at a temperature from 25 °C to 120 °C, preferably from 50 °C to 100 °C, even more preferably at 70 °C.

In a further embodiment, the present invention relates to a process characterized in that it comprises the following additional steps:
packaging; and
cleaning, preferably with caustic detergent and/or detergent with nitric acid.

In a further embodiment, this invention relates to a process characterized in that it additionally comprises a condensation step for obtaining essential oils and/or aromas.

In a further embodiment, this invention relates to a process characterized in that it additionally comprises an ozonation step.

In one embodiment, the hopper (1) preferably has a capacity of 6 cubic metres, with flat flange for coupling the eccentric screw pump (26). The 3-phase grinder (2), which is coupled to the hopper (1), is preferably made of stainless steel, with scissor-shaped cutting claws and fine cutting blades. It can also be motorised, for example at 4.5 hp.

In one embodiment, the eccentric screw pump (26), is preferably a Vincent screw pump or other at 3 ton/hour. The pneumatic butterfly valve (4), can be 10 inches diameter with stainless steel seat, EPDM seals (quality / type of rubber / plastic) and pneumatic actuator operating pressure 2 bar.

In one embodiment, the body of the dryer (5) is preferably double, with an outer jacket-type coil for heating the product. The body of the dryer (5) is also, in a preferred mode of implementation, insulated with stone wool, preferably 100 mm thick, and has external insulation in stainless steel plate.

In one embodiment, the pneumatic discharge ports (6) have preferably an opening angle of 90 degrees and are moved by pneumatic actuator. The horizontal mixer (7) is, in a preferred mode of implementation, a helical-type double belt worm mixer.

In one embodiment, the stirring motor reducers (8) are preferably parallel helical gearings. The plurality of mechanical seals (9) for retention of the product are preferably provided with cylindrical spring and independent rotation.

In one embodiment, the filter, preferably a bag filter (11) can be of a tubular structure, preferably in stainless steel, with filter bags to retain the suspended particles present in the steam; the cooling chiller (3) with refrigerated circulator, with heating or other, and the insulated tank (14) with a cold water coil, preferably with capacity of 8000 litres, and in a more preferred embodiment, with %" inner diameter coil, insulated with high density polyurethane and coating in stainless steel plate.

In one embodiment, the cold water pump (24) corresponds to a series of CS/CSF circulators, which are referred to as glandless pumps, comprised of electric motors with 3 speeds, with the possibility to manually selecting the desired speed. The CSF version is flange-connected. These circulators are used for domestic sanitary water applications.

In one embodiment, the screw discharge conveyor (18) is equipped with a second reception hopper (12) and presents the possibility of having a cooling coil in the screw tray to function as a product cooler upon its exit.

Preferably, the high temperature moisture sensor (19) measures 25 times per second, allowing a quick response to any changes regarding the moisture content in the process. It also features integral signal processing and a range of measurement modes, which allows the sensor performance to be optimised for measuring the moisture content in the flow of materials, such as granules, animal feed, nuts and grains.

In one embodiment, the collection tank (21) of water from evaporation can have a globe-type valve, with a simple effect pneumatic actuator.

In one embodiment, the instrumentation (22) relates to modulating valves for vacuum management and monitoring inside the reactor body (5), discharge of the condensate retained in the condensation tubular exchanger (16), sewer exhaust management, and minimum and maximum level probes of the evaporated water collection tank (21).

In order to give evidence of the aforementioned advantages, results obtained from a sample comprised of food by-products of animal and plant origin are herein after presented: fruit and vegetables; meat; fish and bakery. The report and the tests were carried out by *Católica* - *Escola Superior de Biotecnologia,* Porto, Portugal.

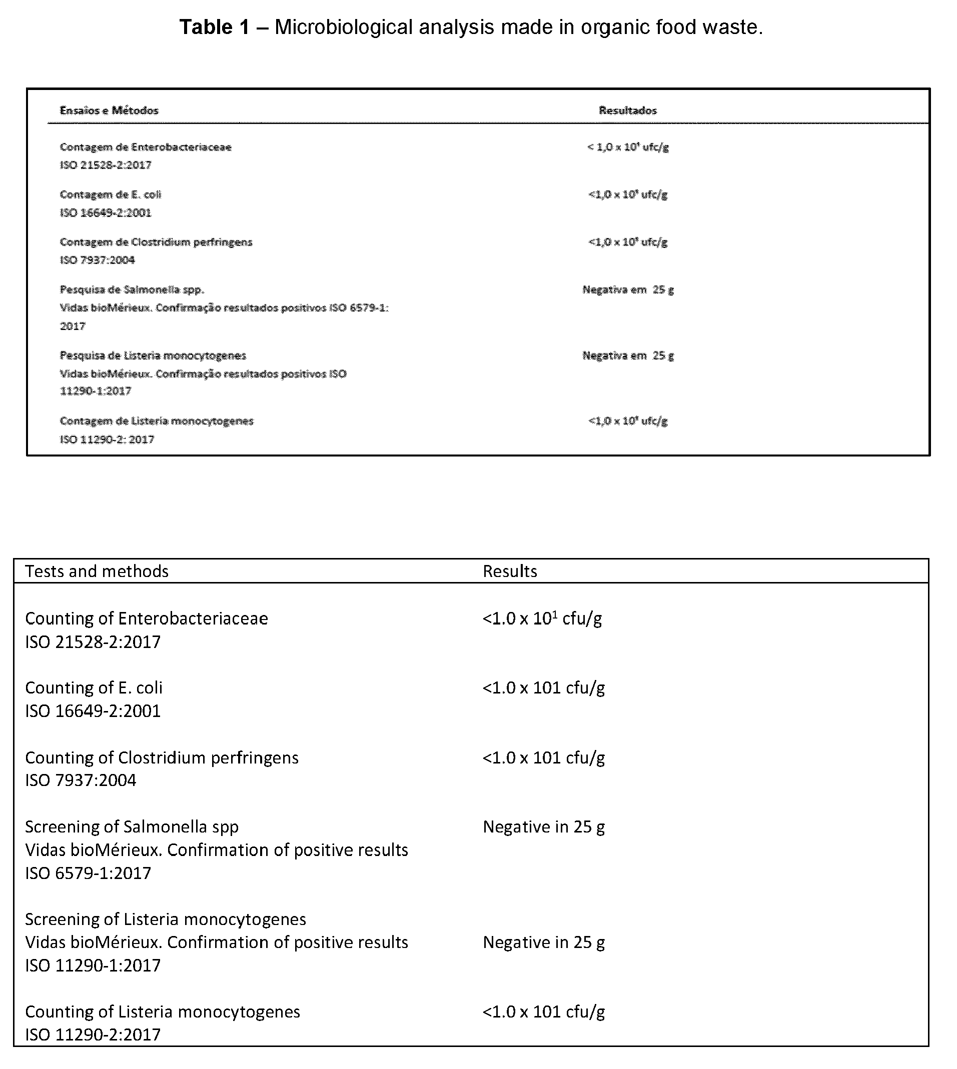

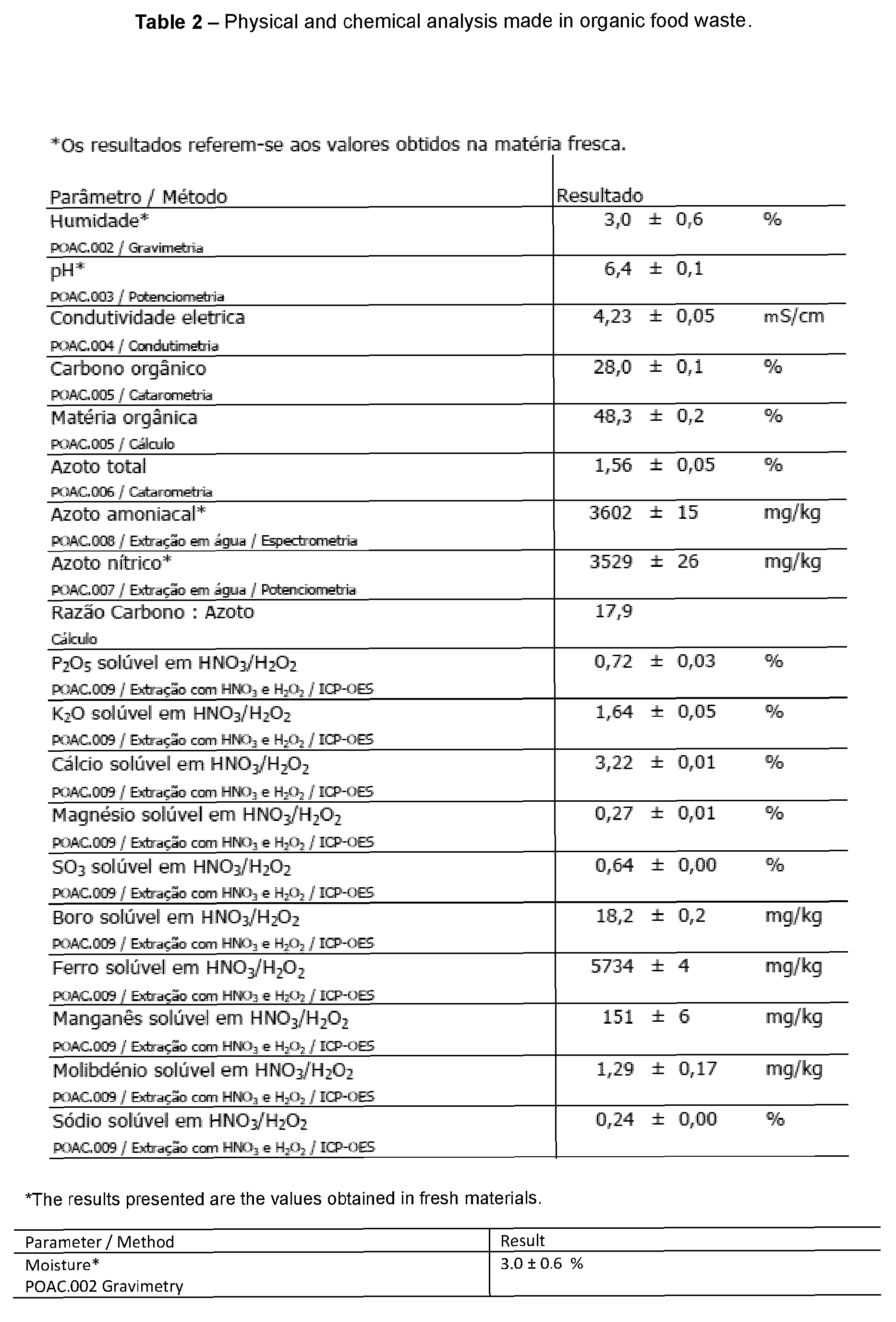

### Examples

### Example 1

Below is a study of the increased protein digestibility in by-products with potential application in animal feeds.

| **Sample** | **DCP ND** | **DCP1** | **DCP2** | **DCP3.2** |
|---|---|---|---|---|
| % Digestible protein | 66.0 | 66.8 | 70.3 | 77.5 |

| | | | | |
|---|---|---|---|---|
| *DCP - Sample of Brewery Dreche (by-product obtained as result of beer production). | | | | |

The results of this example show that there is an increase in digestible protein, considering the correct enzyme complex. Without any addition of enzymes, there is 66% of digestible protein and this value increases depending on the effectiveness of the enzyme complex and the choice of the most suitable enzymes. The DCP1 and DCP2 samples represent not so efficient enzyme complexes for the matrix to be treated, and the DCP3.2 sample represents the most efficient set of enzymes in the hydrolysis of the matrix under analysis. With the DC P3.2 treatment the protein digestibility increases 11.5%, which represents a proportional increase in protein assimilation by the animals consuming the feed that is subject to this treatment.

### Example 2

In this example, the influence of different enzyme complexes (EC) and the identification of essential oil extraction yields (mass: water) were studied.

| **Enzyme Complex (EC)** | **Without EC** | **EC 1 (2:1)** | **EC 2 (2:1)** | **EC 3 (2:1)** | **EC 1 (1:1)** | **EC 1 (1:0)** | **EC 1 (1:0.25)** |
|---|---|---|---|---|---|---|---|
| Yield | 0.1 | 0.3 | 0.21 | 0.25 | 0.28 | 0.34 | 0.7 |

The results of this example show that the non-application of enzymatic treatment decreases the oil extraction yield by about 70%. The sample WITHOUT EC represents the extraction of essential oils and aromas without enzymatic treatment and the sample EC 1 (1:0.25) represents the sample that was subjected to enzymatic treatment with the most efficient enzyme complex. However, in this example, it is noted that the addition of water interferes with the process and the sample with the best results has a ratio of 1:0.25 (mass: water). In view of these results, it becomes clear that the application of a suitable enzyme complex and a favourable environment for its optimization (equipment) brings great advantages, since the extraction yield is much higher. This process is an innovation compared to the existing state of the art, since the extraction yields obtained in an industrial context (0.7%) are much higher than those obtained today with the processes that are already implemented in the industry (0.3 to 0.4%).

### Example 3

In this example, the analysis of samples without enzymatic treatment and with enzymatic treatment is made and the increase of NPK in by-products with potential application in organic improvers is presented.

| | **N-Total (%)** | **P-Total (%)** | **K-Total (%)** | **C/N** |
|---|---|---|---|---|
| **Sample without enzymatic treatment** | 3.04 | 1.27 | 2.33 | 13.8 |
| **Sample with enzymatic treatment** | 4.14 | 2.06 | 3.31 | 8.6 |

The results of this example show that the application of the enzyme complex under optimal conditions allows a substantial increase in the most important components for the formulation of an organic improver/ fertilizer: Nitrogen (N), Phosphorus (P), Potassium (K) and Carbon / Nitrogen Ratio (C/N). One of the advantages of applying an enzymatic treatment to the formulation of organic improvers is the increase in the stability of the final product, as shown by the decrease in the Carbon / Nitrogen ratio.

As will be evident to a person skilled in the art, the present invention should not be limited to the embodiments described herein, with a number of changes being possible, which remain within the scope of this invention. Of course, the preferred embodiments above described are combinable in the different possible forms, the repetition of all such combinations being herein avoided.

## Claims

1. A closed system for the processing of organic waste and its by-products into fertilisers, feeds and/or essential oils and/or aromas, **characterized in that** it includes at least a first module for waste reception, at least a second module for waste reaction and at least a third module for transporting the fertilisers, feeds and/or essential oils and/or aromas, which comprise the following elements: a hopper (1), a grinding element (2), a cooling chiller (3), a reactor (5), a mixer (7), a stirring element, a retaining element (9), a heating element (10), a reservoir, a compressor (15), a condenser (16), a system control panel, a moisture sensor (19), a temperature probe (20), a water tank (21), a water circulating pump (24) and a vacuum pump (27).

2. A system according to the previous claim, **characterized in that** the first module comprises the following elements: a hopper (1), a grinding element (2), a cooling chiller (3), a pneumatic butterfly valve (4), a reactor (5), a pneumatic port (6), a mixer (7), a stirring reducer (8), a retaining element (9), a heating chiller (10), a compressor (15), a moisture sensor (19), a temperature probe (20) and a skid structure (23).

3. A system according to any of the above claims, **characterized in that** the second module comprises the following elements: a reactor (5), a pneumatic door (6), a mixer (7), a stirring reducer (8), a retaining element (9), a heating chiller (10), a filter, a discharge hopper (12), a central steam inlet (13), a tank (14), a compressor (15), a condenser (16), an electrical panel and control panel (17), a moisture sensor (19), a temperature probe (20), a water tank (21), instrumentation (22), skid structure (23), a water pump (24) and a vacuum pump (27).

4. A system according to any of the above claims, **characterized in that** the third module comprises the following elements: a cooling chiller (3), a pneumatic port (6), a discharge hopper (12), an electrical panel and control panel (17), a load carrier (18), instrumentation (22), skid structure (23) and at least one centrifugal pump (29) and/or (30).

5. A system according to any of the above claims, **characterized in that** it comprises:
at least one hopper (1) for receiving the raw material to feed the reactors;
at least one grinder (2) at the entrance coupled to the hopper (1);
at least one screw pump (26);
at least one pneumatic butterfly valve (4)
at least one reactor (5);
at least two pneumatic discharge ports (6);
at least one horizontal mixer (7);
at least two stirring motor reducers (8);
a plurality of mechanical seals for retention of product (9);
at least two vacuum pumps (27) with protective demister;
at least one bag filter (11);
at least one cooling chiller (3);
at least one central steam inlet (13) comprising an inlet and delivery manifold to a vacuum jacket and chimney, with a modulating valve for temperature control in the reactor jacket, with a pressure reducer;
at least one insulated tank (14);
at least one cold water circulating pump (24);
at least one tubular exchanger (16) for condensation of the steam sucked in from the vacuum dryer, comprising at least two vacuum inlets and preferably a cooling coil with heat transfer area;
an electrical panel and system control panel (17);
at least one discharge conveyor (18)
at least one temperature probe (20) for temperature control in the upper chamber of the dryer;
at least one moisture sensor (19) for humidity control upstream or downstream of the dryers;
at least one collection tank (21) for collecting water from evaporation;
at least one essential oils extraction tank (32) and a Soxhlet tank (33) instrumentation (22);
and at least one skid structure (23);
at least one compressor (15);
and at least one bag filling station comprising weighing and weight monitoring equipment at the discharge station from the dryer; at least one outlet station for product storage, preferably on a roller conveyor;
and at least one ozonation diffuser (25) for deodorisation.

6. A system according to any of the above claims, **characterized in that** it comprises a condenser for obtaining essential oils.

7. A process for the conversion of waste and its by-products into fertilisers, feeds and/or essential oils and/or aromas, **characterized in that** it comprises the following steps:
reception of organic waste in a hopper (1);
grinding of the waste in a grinder (2);
enzymatic reaction under controlled temperature, pressure and pH conditions;
drying or hydro-distillation, preferably under vacuum;
discharge of fertilisers, feeds and/or essential oils and/or aromas;
optionally, fertilizers and feeds' acquisition of form, preferably by granulation or pelletisation.

8. A process according to the previous claim, **characterized in that** the stage of grinding the waste comprises the steps of pre-crushing, extrusion of buds and subsequent cutting.

9. A process according to any of the claims 7-8, **characterized in that** the preparation step is carried out with catalysts, an enzymatic mixture and/or a buffer solution.

10. A process according to the previous claim, **characterized in that** the enzymatic mixture comprises enzymes selected from the following list: pectinases, endo- and/or exo-polymethylgalacturonases, polygalacturonases, pectate and/or pectin lyases, amylases, endoamylases, exoamylases, debranching enzymes, isoamylases, pulanases of type 1, cellulases, endoglucanases, exoglucanases, cellobiohydrolases, β-giucosidases, hemicellulases, endo and exo-xylanases, proteases, serine proteases, cysteine proteases, threonine proteases, aspartic acid proteases, glutamic acid proteases, metalloproteins and mixtures thereof.

11. A process according to any of the claims 7 to 10, **characterized in that** the enzymatic reaction step is performed with rotation and at a temperature from 25°C to 120°C, preferably at a temperature suitable for the optimal combined temperature of the enzymatic mixture in use.

12. A process according to any of the claims 7 to 11, **characterized in that** the drying step is carried out with rotation and at a temperature from 25°C to 120°C, preferably from 50°C to 100 °C, even more preferably at 70°C.

13. A process according to any of the claims 7 to 12, **characterized in that** it additionally comprises the following steps:
packaging; and
cleaning, preferably with caustic detergent and/or detergent with nitric acid.

14. A process according to any of the claims 7 to 13, **characterized in that** it additionally comprises a condensation step for obtaining essential oils and/or aromas.

15. A process according to any of the claims 7 to 14, **characterized in that** it further comprises an ozonation step.
